# EUROPEAN PATENT APPLICATION

(11) **EP 2 287 991 A1**
(43) Date of publication of application: **23.02.2011**
(21) Application number: 09168128.8
(22) Date of filing: 19.08.2009
(51) Int. Cl.: H02J 3/00, H02J 3/14, G06Q 10/00, G06Q 50/00

(54) **Optimizing power consumption of data centres**

(71) Applicant: ABB Research Ltd., 8050 Zürich (CH)
(72) Inventor: Husain, Bazmi, 8032 Zürich (CH); Ganz, Christopher, 8046 Zürich (CH); Naedele, Martin, 8050 Zürich (CH); Schierholz, Ragnar, 4052 Basel (CH)
(74) Representative: ABB Patent Attorneys

(57) **Abstract**

The present invention is concerned with field of electrical power generation and distribution. In particular, the invention relates to a system for optimizing the power consumption of a distributed data centre. The computational loaf of the distributed data centre is distributed among computing nodes of the data centre, which may be connected with different power generation facilities or different power distribution nodes of a power grid or which may consume power from different power providers. The distribution takes place such that the power consumptions of the computing nodes arc optimized with respect to each other. For example, the optimization may be with respect to the electrical load of the power generation facilities, the power distribution capacities of the power grid or with respect to the price of the consumed power.

## Description

### FIELD OF THE INVENTION

The invention relates to the field of electrical power generation, distribution and consumption. In particular, the invention relates to a system, a power grid control system and a method for optimizing power consumption of data centres, to a program element and a computer-readable medium.

### BACKGROUND OF THE INVENTION

Nowadays, the production or generation of electrical power often takes place in large power plants that are connected over an electrical power grid with consumers of the electrical power. Electrical power is difficult to store efficiently and thus the consumption and production of electrical power may have to be matched at all times and points, for example in each subsystem of the electrical power grid. To ensure a high availability of electrical power at every node of the electrical power grid and to provide as much electrical power as needed to the consumers, the electrical power grid may have to be balanced.

For example, this may be done by regulating the output of the power plants. However, this sometimes may require an operating point of a power plant that is not optimal from the perspective of efficiency or of emission. The power plant may be most efficient in only a relatively small window of production level. This may mean, if the production level falls below or exceeds a certain threshold, the power plant may run below its maximum efficiency or may emit more pollution than necessary.

In certain cases, even certain consumers may have to be switched off to maintain the power balance. Generally, power generation companies strive for an almost flat demand curve, for example by reducing the price of the electrical power during low consumption times and increasing the price during high consumption times (critical peak pricing, time-of-use pricing).

For example, in steel and aluminium manufacturing, the production planning may be optimized such that energy demand pikes are avoided. Often, the operating companies of such facilities have graded contracts with their energy suppliers. This means that a basis demand up to a first load is billed with a first price for the electric power and that a second load beyond the first load is billed with a second price being higher than the first price. There may be a third stage of pricing. Further, it is possible that different energy suppliers are switched on at different loads. For example, the contract with a first energy supplier regulates that only a demand of a third load (lower than the second load but higher than the first load) may be covered by the first energy supplier, but a second energy supplier may cover a further demand prized with a third price (higher than the first and second price). The prices and supply capacities may be specified in middle and long term contracts.

Further consumers of the electrical power may be computing or data centres which require a significant amount of electrical power, for example for running the computer equipment and for cooling it. The cost of electrical power may be a significant factor in running a data centre. For example, data centre owners such as Google are making the availability of cheap power a major factor in location decisions.

The planning of a data centre may therefore be based on estimations of the average power consumption and on average power costs. However, once the data centre is built, the owner or operator of the data centre may not be able to react to fluctuations of the power costs or a deviation from the estimations.

### DESCRIPTION OF THE INVENTION

It is an object of the invention to influence and optimize an actual or instantaneous power consumption of a plurality of communicatively interconnected data centers. A target of the optimization may be an overall power consumption or overall costs for the power consumed by the data centers themselves, or any aspect related to an active or reactive power being generated and provided to the data centers by a power supplier.

This object is solved by the subject-matter of the independent claims. Embodiments of the invention are evident from the dependent claims.

A first aspect of the invention relates to a system for optimizing an overall power consumption of a plurality of data centres.

According to an embodiment of the invention, the plurality of data centres comprises at least a first data centre and a second data centre and the system comprises a distribution unit. The distribution unit is adapted to distribute an overall computational load on the at least first and second data centres to a first computational load on the first data centre and to a second computational load on the second data centre, wherein the distribution of the overall computational load is based on a determined first and second power consumption of the first and second data centre, respectively. By (re-) assigning computational load in a flexible way depending on actual or predicted power consumption at a plurality of data centres, a variety of optimization targets can be pursued.

A single, centralized determination unit, or a network of interacting decentralized determination units, is provided to determine a first power consumption of the first data centre and to determine a second power consumption of the second data centre. In other words, the determination units are adapted to provide, in real time or at frequent updates, a mapping of the power consumption per data centre. The determination of a power consumption may be a measurement of an actual real power consumption. However, the determination unit may comprise a statistical component that is adapted to estimate or predict the power consumption based on historical data on the power consumption at different computational loads and the actual or the expected computational load.

With respect to energy tariffs that vary on a slow scale (hourly, daily, weekly, monthly), it may be possible, for the coordinated data centres, to optimize the power consumption, from an economical or monetary point of view and without cooperating with the power supply side. Such economical optimization of the power consumption may be done without adapting the power generation and/or a dynamical pricing, i.e. by interacting with a local power supplier exclusively based on current pricing.

On the other hand, a power supplier coordinating a number of power facilities may, in cooperation with the data centres, optimize the consumed power from a point of view of (both active and reactive) power generation and transmission, by favouring consumption at a particular data centre at the expense of another data centre. To this purpose, the data center load balancing may be integrated into a power grid management system to allow the power grid operator to initiate load balancing actions in order to optimize the operation of the power grid. In this context, as an alternative to a real-time electricity price change model, the data center operator may obtain a bonus payment from the power utility based on cost savings the power utility achieved in its operations by means of load balancing.

A data centre may comprise electrical equipment like computers, their peripheral devices and their cooling devices. A data centre may be a building housing the equipment and these devices or may be connected computing equipment located at a certain location. A data centre may be a facility used to house computer systems and their associated components, such as telecommunication devices and storage devices. However, different or distinct data centres need not be geographically distant and may be located in one place, though "powered" differently. In other words, a single data centre location may include two or more (sub) data centres supplied with the necessary power from two or more distinct power suppliers.

A data centre or computer centre or computing node may be a plurality of connected computers, electrically connected to and supplied with electrical power from the same node of the power grid, and connected to each other over a data network, like the Internet. The plurality of connected computers may be localized at the same place, for example the same building.

The plurality of data centres may be connected with each other by a data network. For example, the first data centre and the second data centre may be connected over a data network like the internet. Thus, the plurality of data centres may be a distributed data centre and a data centre, for example the first data centre and/or the second data centre may be a computing node of the distributed data centre. Therefore, the system may be a system for optimizing the overall power consumption of a distributed data centre, wherein the distributed data centre comprises at least a first computing node and a second computing node.

According to an embodiment of the invention, the computational load of the distributed data centre may be distributed among computing nodes of the data centre, which may be connected with different power generation facilities or different power distribution nodes of a power grid or which may consume power from different power providers. The distribution may take place such that the power consumptions of the computing nodes are optimized with respect to each other. For example, the optimization may be with respect to the electrical load of the power generation facilities, the power distribution capacities of the power grid or with respect to the price of the consumed power.

The determination of the power consumption may be based on estimations. For example, the determination unit may have a set of stored power consumptions that are related to different computational loads of the data centres. With the stored power consumptions, the first and second power consumptions may be estimated based on the distributed overall computational load. The distribution unit may optimize the distribution of the overall computational load with the aid of the determination unit, wherein the determination unit calculates the power consumption of a data centre based on a computational load proposed by the distribution unit.

The power consumption of a data centre may comprise the electrical power consumption of the computing equipment of the data centre and of the cooling equipment of the data centre and may comprise also the electrical power consumption of the building housing the data centre or the computing nodes, for example the power consumption of the electrical lightning of the building or the heating of the building.

Power consumption quantitatively may be specified in kilowatt (kW).

The computational load on a data centre may comprise the amount of calculations the computing equipment of the data centre has to execute. The computational load may be specified in the number of requests a data centre has to handle. A request may be a client request from an external client to a server of the data centre. A request may also be a database request from a process executed by the data centre to a database that may be also situated in the data centre. The computational load may also be specified in the number or the complexity of data analyses to be computed. The data analyses may be predefined and prescheduled analyses such as simulation of experiments or statistical analyses of large numbers of data points. The complexity of such analyses may be specified in the number of input parameters and data points as well as the computational complexity of the algorithms used in the analyses.

The plurality of data centres, for example the first and the second data centres, may be connected to each other over a data network. The data centres, in particular the first and the second data centre, may exchange information or data over the data network to synchronize the computational tasks or to share common resources, like databases. The connecting data network may be used to distribute the overall computational load on the data centres. For example, there may be a overall number of requests to the plurality of data centres in general, and a first number of these requests from the overall requests is distributed to the first data centre, which then becomes responsible to process or handle these requests, and a second number of the overall number of requests may be distributed to the second data centre, which then becomes responsible to handle or to process the second number of requests.

For example, the distributed data centre or the plurality of data centres may be adapted for cloud computing or bulk computing. Cloud or bulk computing may be a method of computing in which dynamically scalable and often virtualized resources are provided as a server of a data network like the Internet. A distributed data centre may have scalable resources, when for example depending on the computational load on the data centre, computing equipment, for example a number of single computers, is switched on and off to process parts of the computational load on the data centre. Bulk or cloud computing provided by clouds or grids of computers or by data centres connected by a data network, may provide a consumer of electrical power that combines high power needs with easy and fast transportability.

According to an embodiment of the invention, the system for optimizing the power consumption may be a single device, for example a single computer running software adapted to optimize the power consumption. The system may also comprise components that are remote from each other and connected over a network. For example, the system may comprise several devices and software modules on different computers that are connected by a data network. It may be possible that the determination unit and the distribution unit are different devices at different locations. However, it may be possible, that the determination unit and the distribution unit are functional or software modules running on a single device.

According to an embodiment of the invention, the first power consumption of the first data centre may be dependent of the first computational load on the first data centre and the second power consumption of the second data centre may by dependent of the second computational load on the second data centre. For example, the data centre may comprise a number of computers which are switched on and off dynamically dependent on the computational load on the data centre. Each of the single computers may have a certain maybe constant amount of power consumption, if it is switched on, and nearly no power consumption, if it is switched off. Therefore, the power consumption of the data centre depends on the number of switched on computers and therefore on the computational load on the data centre.

According to an embodiment of the invention, the distribution unit may be adapted to adjust the distribution based on changing power consumptions of the first and second data centre. For example, the system may continuously repeat the determination and the distribution. This may be continued until a desired optimal distribution has been reached. A continuously determination may be a determination which takes place in predetermined time units, for example every hour or every minute. Alternatively, load reassignment may be explicitly requested by a power grid control system operator in an attempt to shift computational load before dispatching a new power plant.

According to an embodiment of the invention, the determination unit may be adapted for continuously determining the first power consumption and the second power consumption.

According to an embodiment of the invention, the determination unit is adapted to determine a first power availability for the first data centre and to determine a second power availability of the second data centre. The power availability may be the amount of how much power can be supplied to a data centre. For example, a data centre may be connected to a node of a power grid in such a way, that the maximal amount of electrical power that may be supplied to the power centre is variable with respect to time. The cause of this may be that further consumers are connected to the node and are consuming electrical power that then may not be providable to the data centre. For example, there may be private households or commercial buildings connected to the node of the power grid and the consumption of electrical power at the node varies with respect to the time of the day.

The power availability may comprise the price or the costs of the electrical power the data centre is consuming. For example, the price of the electrical power may be different for a different time of the day. There are power providers which charge different prices for the electrical power during the day and during the night. It may also be possible, that different power providers have different pricing systems and the first data centre and the second data centre are consuming electrical power from these different power providers. Ultimately, a "power cost per calculation" may be a suitable metric to reassign computational load between coordinated data centres.

The determination of the power availability may be based on measurements or on data provided by the power grid provider or the power providers with different pricing systems. Alternatively or additionally, the determination may also be based on other parameters, for example the time of the day.

According to an embodiment of the invention, the distribution unit may be adapted to distribute the overall computational load based on the determined first power availability and the determined second power availability.

For example, in the situation, that there is a high or cheap availability of power for the first data centre but there is only low or expensive availability for the second data centre, the computational load may be distributed such that most of the calculations are done at the first data centre. It may also be possible, that the distribution is optimized such that the overall costs of the power consumption of the first and the second data centres is minimized.

According to an embodiment of the invention, the determination unit is adapted for continuously determining the first and the second power availabilities. For example, the result of the determination of the power availability may be time-dependent. This may be the case, if the electrical load on the node of the power grid of one of the data centres is varying over the day, for example due to further consumers connected to the node.

According to an embodiment of the invention, the first data centre is adapted to consume electrical power from a first power generation facility and the second data centre is adapted to consume electrical power from a second power generation facility. For example, the first data centre may be connected to a first node of a power grid and the second data centre may be connected to a second node of the power grid. It may be possible, that the data centres or computing centres, or cloud nodes, respectively, are collocated with major nodes or choke points (bottle necks) of the transmission grid, or with production points, i.e. power generation facilities, of the electrical power system.

According to an embodiment of the invention, a single data centre may also be connected to different grids operated by different suppliers with different pricing or different availability. Then the shifting of computational load may also be done within a single data center. Either the computational load may be shifted to different computing equipment connected to different power suppliers or the connections of the currently used computing equipment could be dynamically switched to a different power supplier.

According to an embodiment of the invention, the determination unit is adapted for determining a first power generation level of the first power generation facility and for determining a second power generation level of the second power generation facility. The power generation level may be the amount of electrical power a power generation facility is producing at a certain time point. For example, a power generation level may be specified in kW.

According to an embodiment of the invention, the distribution unit is adapted for distributing the overall computational load based on the determined first power generation level and the determined power generation level. For example, power generation facilities may be most efficient at a certain power generation level.

According to an embodiment of the invention, the distribution unit is adapted for distributing the overall computational load such that the first and second power generation levels are optimized with respect to first and second most effective power generation levels of the first and second power generation facilities.

For example, a power generation facility may become less efficient, if the actual power generation level differs from the most effective power generation level. The overall computational load on the plurality of data centres may be distributed to the first and the second data centre in such a way that the electrical load on the first and second power generation facilities caused through the consumption of the first and second data centre, which is dependent on the computational load on the respective data centre, is distributed in such a way on the first and second power generation facilities that the first and second power generation facilities may work with first and second power generation levels that are nearer at the most effective power generation levels. The data centres may be optimized such that the overall computational load is distributed with respect to the optimal, i.e. most effectively, balanced power generation levels of the power generation facilities.

According to an embodiment of the invention, the first and second data centres are connected to a power grid. The determination unit may be adapted for determining power flows in the power grid and the distribution unit may be adapted for distributing the overall computational load based on the determined power flows.

An electrical power grid may comprise electrical wires, transformers and/or switches and their control components. An electrical power grid may be a network of electrical wires for transporting electrical power generated by power generation facilities to a plurality of consumers. For example, the first and second power generation facilities may be connected via the power grid and may be connected over the power grid to the first and the second data centre. For example, the loss of power in the power grid, perhaps caused due to different resistances of the electrical wires, may be different between the first data centre and the first power generation facility or a first node of the power grid and between the second data centre and the first power generation facility or the node of the power grid. The same may be true for the electrical connections of the first and second data centres to the second power generation facility or to a second node of the power grid.

By distributing the overall computational load on the first and second data centre, the power consumptions may be optimized such that the power flows in the power grid are optimized. For example, the overall loss of power in the power grid may be minimized.

According to an embodiment of the invention, power grid control features are realized that take the requirements of computing grids, i.e. data centres connected by a network, into account. An efficient energy flow control may be combined in electrical networks or electrical grids. If the overall consumption of electrical power of the plurality of data centres is reduced or if the overall emissions of the power generation facilities are reduced, this may be a further aspect of green computing for data centres. The computational load balancing may be combined with the electrical power load balancing such that computations are moved to those data centres where a surplus of electrical power is available. High volume requests, short running requests or context/transaction-free requests like searches may be especially well suited to such optimization schemes.

According to an embodiment of the invention, the determination unit is adapted to continuously determine power flows, i. e. to determine power flows repeatedly in predefined time steps. It may be that changes in production of electrical power may require switching in the power grid to match power flows to power or transmission line capacities.

According to an embodiment of the invention, the distribution of the overall computational load may be based on a transmission capacity of a part of the power grid. A predefined part of power grid may be certain electrical lines or wires or may be the overall electrical connection between two nodes of the power grid. For example, the transmission capacity may be the overall transmission capacity between the first data centre and the first node of the power grid. For example, if other consumers are connected to this transmission line, the power consumption of the first data centre together with the other consumers may be limited by the transmission capacity of this transmission line.

According to an embodiment of the invention, the first data centre is adapted to consume electrical power from a first power provider and the second data centre is adapted to consume electrical power from a second power provider. The first power provider may charge a time dependent first price for the electrical power consumed by the first data centre and the second power provider may charge a time dependent second price for the electrical power consumed by the second data centre. The prices may be charged for the consumed electrical power (kWh) multiplied with the time the data centres consumed this electrical power. The prices of the electrical power from the two power providers may vary over time. It may also be possible that the price difference between the two prices varies over time.

According to an embodiment of the invention, the distribution unit may be adapted to distribute the overall computational load based on a first price for the first power consumption and a second price for the second power consumption. For example, the data centres may be optimized such that the computational load is distributed with respect to the lowest running costs of the plurality of data centres.

According to an embodiment of the invention, the determination unit may be adapted for polling a first price for the first power consumption of the first data centre or for polling a first price from the first power provider. The determination unit may also be adapted for polling a second price for the second power consumption of the second data centre or for polling a second price from the second power provider. The prices may be polled from a power exchange market. A polling of prices may be to request the prices over a data network, for example, from the power exchange market.

A control of computational load balancing may be linked to energy exchange markets like, for example, the European Energy Exchange EEX in Leipzig. It may be possible, that an operator of the plurality of data centres or at least the first and second data centre may switch the power consumption dynamically between redundant power providers, seeking to cover most demands from the currently cheapest provider or supplier.

According to an embodiment of the invention, the determination unit may be adapted for determining first costs for the first power consumption of the first data centre and for determining second costs for the second power consumption of the second data centre. The distribution unit may be adapted for distributing the overall computational load such that overall costs of the at least first and second data centres are minimized. The first costs may be the costs determined with the first price and the first power consumption, for example the first prices times the first power consumption. The second costs may be the costs determined with the second price and the second power consumption, for example the second price times the second power consumption. The overall costs may comprise the first costs and the second costs, for example may be the sum of these costs.

According to an embodiment of the invention, the distribution unit may be adapted for dynamically distributing the overall computational load. For example, the distribution unit may dynamically distribute the overall computational load, if a continuous determined input parameter, e. g. determined by the determination unit, changes, and the distribution unit changes or adjusts the distribution in reaction to the changed input parameter.

According to an embodiment of the invention, the determination unit may be adapted for measuring the first power consumption of the first data centre in relation to the first computational load on the first data centre. For example, the power consumption measured for a certain computational load will be stored in a database. Therewith, a future power consumption for a future computational load may be determined or estimated based on the measurements.

According to an embodiment of the invention, the determination unit may be adapted for determining the first power consumption of the first data centre based on an actual first computational load of the first data centre and a previously measured first power consumption of the first data centre.

For example, the power consumption of the second data centre may be estimated based on the determinations of power consumption and the computational load of the first data centre. Additionally or alternatively, also the determination unit may be adapted to conduct the measuring and the determination according to the second data centre.

All the embodiments described in the above and in the following may be combined, dependent on the requirements to the plurality of data centres. For example, the optimization may be based on a combination of the power generation levels of the power generation facilities, the power flows in the power grid and the prices for the consumed electrical power.

According to an embodiment of the invention, the system may be a SCADA system. For example, the SCADA system may comprise a control room. An operator in the control room may monitor the determined values of the determination unit and may adjust parameters of the system to distribute the computational load on the data centres.

According to an embodiment of the invention, the system may further comprise at least one of the at least first and second data centres, the plurality of data centres, the first and second power generation facilities and components of the power grid or the power grid itself.

A further aspect of the invention relates to a power grid control system.

According to an embodiment of the invention, the power grid control system may comprise the system for optimizing a plurality of data centres as described in the above and in the following. For example, the power grid control system may comprise a control room which comprises parts of the optimization system as described in the above and in the following.

A further aspect of the invention relates to a method for optimizing an overall power consumption of a plurality of data centres.

According to an embodiment of the invention, the method comprises the steps of: determining a first power consumption of the first data centre and determining a second power consumption of the second data centre; distributing an overall computational load on the first and second data centres to a first computational load on the first data centre and to a second computational load on the second data centre based on the determined first and second power consumptions.

All method steps described with respect to the embodiments of the system in the above and the in following (for example determination steps, distribution steps, measuring steps and/or adjustment steps) may be embodiments of the method and vice versa.

A further aspect of the invention is a program element for optimizing an overall power consumption of a plurality of data centres which, when being executed by a processor is adapted to carry out the method as described in the above and in the following. For example, the system for optimizing the power consumption may comprise a computer that is adapted to execute the program element.

A further aspect of the invention is a computer-readable medium, in which a program element for optimizing an overall power consumption of a plurality of data centres is stored, wherein the program element, when being executed by a processor is adapted to carry out the steps of the method as described in the above and in the following.

A computer-readable medium may be a floppy disk, a hard disk, a CD, a DVD, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

According to an embodiment of the invention, a system for optimizing the power consumption of data centres may comprise: a flexible data centre architecture which allows dynamic and seamless reallocation of computational load, applications and data between different physical data centres; a continuous measurement of power consumption in the data centres linked to specific computational tasks such as specific applications or types of transactions; a continuous measurement of power grid loads; a continuous measurement of power generation levels with relation to the most efficient power generation level in each physical power generation facility; a continuous analysis of power flows in the power grid to detect oversupply, undersupply, and overloaded / non-loaded transmission lines.

According to an embodiment of the invention, the system may be adapted to allow the control of the allocation of computational load, applications and data in said distributed data centre architecture based on the input of the measurement of power loads, power generation levels, and transmission capacities.

According to an embodiment of the invention, a system for optimizing the power costs of data centres may comprise: a flexible data centre architecture which allows dynamic and seamless reallocation of computational load, applications and data between different physical data centres; a continuous measurement of power consumption in the data centres linked to specific computational tasks such as specific applications or types of transactions; a continuous polling of power prices at power exchanges, polling current power prices for individual physical data centre locations.

According to an embodiment of the invention, the system may be adapted to allow the control of the allocation of computational load, applications and data in said data centre architecture based on the input of the polling of power prices.

According to an embodiment of the invention, the system may be adapted to allow the control of the allocation of applications and data in said data center architecture based on the input of the polling of power prices.

According to an embodiment of the invention, the system may be adapted to be integrated with a power grid control system, for example a SCADA system.

### BRIEF DESCRIPTION OF THE DRAWINGS

The subject matter of the invention will be explained in more detail in the following text with reference to exemplary embodiments which are illustrated in the attached drawings.
Fig. 1 shows a schematic diagram of an optimization system according to an exemplary embodiment of the invention.
Fig. 2 shows a flow diagram of an optimization method according to an exemplary embodiment of the invention.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

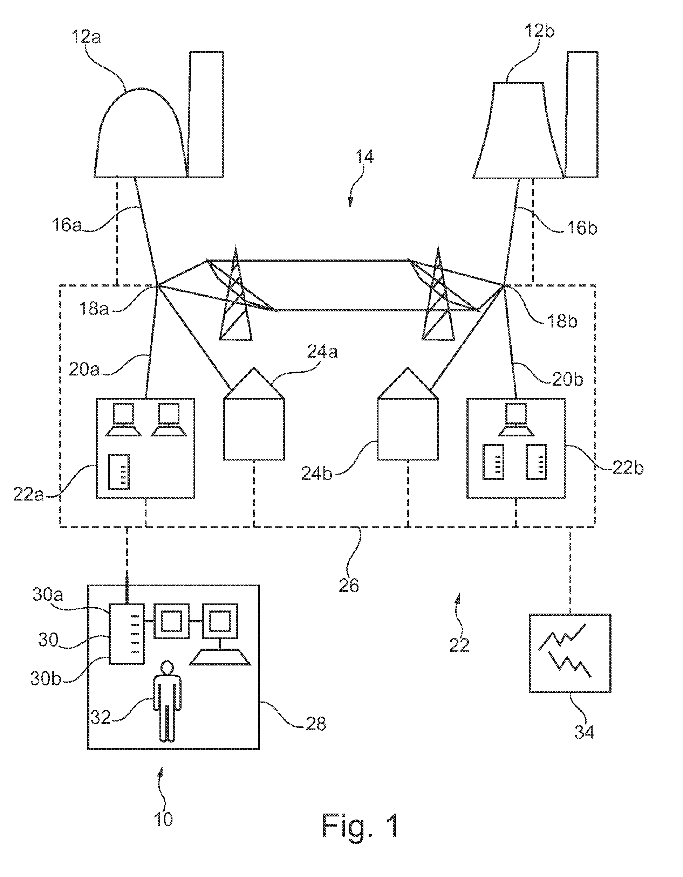

Fig. 1 shows a distributed system comprising an optimization system 10. The distributed system comprises a first power generation facility 12a connected over the electrical power transmission line 16a to a first node 18a of a power grid 14. The distributed system further comprises a second power generation facility 12b that is connected with a transmission line 16b to a second node 18b of the power grid 14.

The two power generation facilities 12a, 12b do not have to be connected to the same power grid 14. They may be connected to different independent power grids operated by independent power suppliers offering different pricings at a given point in time.

The distributed system comprises further a first data centre 22a that is connected over an electrical power transmission line 20a to the first node 18a and a second data centre 22b that is connected over an electrical power transmission line 20b to the second node 18b. First electrical power consumers 24a are connected to the first node 18a and second power consumers 24b are connected to the second node 18b. The transmission lines 16a, 16b, 20a, 20b may be part of the power grid 14.

The optimization system 10 is situated in a control room 28 and comprises a control unit 30 that may comprise computers, monitors and input devices like a keyboard. Inside the control room 28 there is a human operator 32 watching the monitors and applying control commands to the system 10.

Over communication lines 26 or a data network 26, like the Internet, a determination unit 30a of the control unit 30 is connected to the first power generation facility 12a and to the second power generation facility 12b. The determination unit 32a of the control unit 30 is adapted to receive information about the power generation level of the first power generation facility 12a and the second power generation facility 12b over the data network 26.

The control unit 30 comprises a determination unit 30a for determining the different parameters of the distributed system and a distribution unit 30b for distributing the computational load on the data centres 22a and 22b. The determination unit 30a and the distribution unit 30b may be functional modules of the control unit 30.

The determination unit 30a of the control unit 30 is connected to the first node 18a and the second node 18b of the power grid 14. The determination unit 30a is adapted to receive information about the power availabilities at the nodes 18a and 18b and about the transmission capacities of the power generation grid 14 over the data network 26.

The determination unit 30a is also connected to the first data centre 22a and the data centre 22b over the data network 26. The determination unit 30a is adapted to receive information about the control power consumption of the data centres 22a and 22b and of the actual computational load of the data centres 22a and 22b over the data network 26. Further, determination unit 30a is adapted to receive information about the outstanding requests to the data centres 22a and 22b.

The data centres 22a and 22b are connected over the data network 26 to exchange information and to share common resources. For example, the data centres 22a and 22b may be part of a cloud computing facility that is providing a service on the data network 26 for executing search requests in a large database. The consumers 24a and 24b may also be connected to the data network 26 and may send search requests to the cloud computing facility 22.

The control unit 30 may further be connected to an energy exchange market 34 over the data network 26 and may be adapted to poll the prices for the power, the first data centre 20a and the second data centre 22b are consuming from the data grid network. This may for example be different prices, if the two data centres 22a and 22b have contracts with different power providers or contracts with different prizing systems.

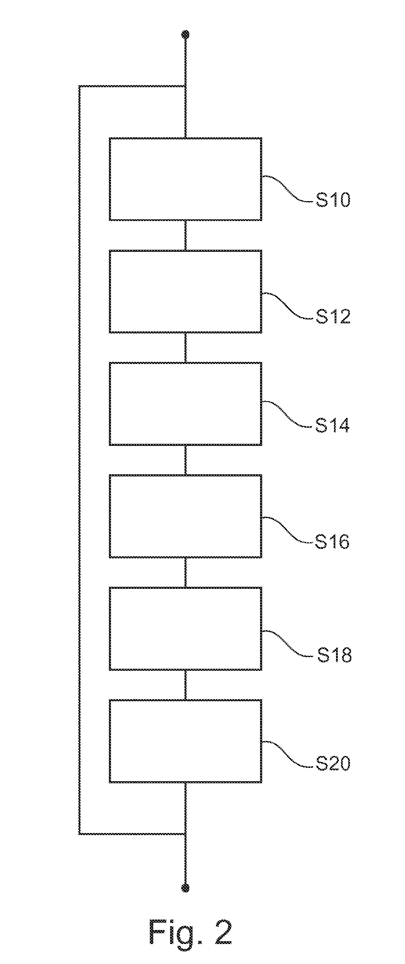

Fig. 2 shows a flow diagram of an optimization method that may be conducted or executed by the control unit 30.

In step S10 the determination unit 30a requests the overall computational load from the cloud computing facility 22 for example by requesting the number of actual search requests that have to be executed by the data centres 22a and 22b. Further in step S10, the determination unit 30a may request the actual power consumption of the first and second data centres 22a, 22b.

In step S12, the determination unit 30a saves the actual computational loads of the first and second data centres and the actual power consumptions of the first and second data centres in a database.

In step S14 the determination unit 30a requests the power availabilities at the node 18a and at the node 18b. Further, the determination unit 30a requests information on the state of the power grid 14, for example transmission capacities of parts of the power grid 14. Additionally, the determination unit requests the actual power generation level of the power generation facilities 12a and 12b and the determination unit requests the actual prices for the electrical power for the data centres 22a and 22b from the power exchange market 34.

In step S18, the distribution unit 30b calculates the optimal distribution of the overall computational load to the first data centre 22a and the second data centre 22b. The distribution unit 30b uses the determination unit 30a to determine, which distribution of the overall computational load will generate which power consumptions of the first data centre 22a and the data centre 22b. For example, the determination unit 30a may be adapted to estimate, that for a certain computational load, for example a certain number of search requests to be executed, the power consumption of the first data centre will have a certain value. This estimation may be based on measured and stored power consumptions sent to the determination unit over the network 26 but also may be based on predefined values. For example, the power consumption of a data centre may be calculated from the number of requests times a fixed value.

In step S18, the distribution unit 30b may take further parameters into account for the optimization calculation. These parameters may be collected by the determination unit 30a, for example the power generation level of the power generation facilities 12a and 12b, the transmission capacities and the power flows of the power grid network 14, the power availability at the nodes 18a and 18b and the prices polled from the energy exchange market 34. Some of the optimization steps may be conducted by the human operator 32.

In step S20, after the distribution of the computational load to the data centres 22a and 22b has been calculated or set by the human operator, the distribution unit 30b, sends the determined computational loads to the first data centre 22a and 22b, which themselves start to exchange the outstanding requests over the data network 26 such that the determined computational loads are reached.

After that, the system 10 may start the method again with step S10, so that the method is executed continuously and the computational load may be distributed dynamically between the two data centres 22a and 22b.

The functional modules may be implemented as programmed software modules or procedures, respectively. However, one skilled in the art will understand that the functional modules can be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: optimization system
- 12a: first power generation facility
- 12b: second power generation facility
- 14: power grid
- 16a: transmission line
- 16b: transmission line
- 18a: first node of power grid
- 18b: second node of power grid
- 20a: transmission line
- 20b: transmission line
- 22: cloud computing facility
- 22a: first data centre
- 22b: second data centre
- 24a: first consumers
- 24b: second consumers
- 26: data network
- 28: control room
- 30: control unit
- 30a: determination unit
- 30b: distribution unit
- 32: operator
- 34: energy exchange market

## Claims

1. A system (30) for optimizing an overall power consumption of a first data centre (22a) and a second data centre (22b), comprising
a distribution unit (30b) for distributing an overall computational load on the first and second data centres (30a, 30b) to a first computational load on the first data centre (30a) and to a second computational load on the second data centre (30b), based on a first power consumption of the first data centre (22a) and a second power consumption of the second data centre (22b).

2. The system (30) of claim 1,
wherein the distribution unit (30b) is adapted for distributing the overall computational load based on a first power availability for the first data centre (22a) and a second power availability for the second data centre (22b).

3. The system (30) of claim 2,
wherein the first data centre (22a) is adapted to consume electrical power from a first power generation facility (12a) and the second data centre (22b) is adapted to consume electrical power from a second power generation facility (12b),
wherein the distribution unit (30b) is adapted for distributing the overall computational load based on a first power generation level of the first power generation facility (12a) and a second power generation level of the second power generation facility (12b).

4. The system (30) of claim 3,
wherein the distribution unit (30b) is adapted for distributing the overall computational load such that the first and second power generation levels are optimized with respect to first and second most effective power generation levels of the first and second power generation facilities (12a, 12b).

5. The system (30) of claim 2,
wherein the first and second data centres (22a, 22b) are connected to a power grid (14),
wherein the distribution unit (30b) is adapted for distributing the overall computational load based on a power flow in the power grid (14).

6. The system (30) of claim 5,
wherein the distribution of the overall computational load is based on a transmission capacity of a part of the power grid (14).

7. The system (30) of claim 2,
wherein the first data centre (22a) is adapted to consume electrical power from a first power provider, and the second data centre (22b) is adapted to consume electrical power from a second power provider,
wherein the first power provider charges a time dependent first prizes for the electrical power consumed by the first data centre (22a) and the second power provider charges a time dependent second prize for the electrical power consumed by the second data centre (22b),
wherein the distribution unit (30b) is adapted for distributing the overall computational load based on the first prize and the second prize.

8. The system (30) of claim 7,
wherein the distribution unit (30b) is adapted for polling a first price for the first power consumption of the first data centre (22a) and a second prize for the second power consumption of the second data centre (22b) from a power exchange market (34).

9. The system (30) of claim 1,
wherein the distribution unit (30b) is adapted for distributing the overall computational load such that overall costs comprising first costs for the first power consumption of the first data centre (22a) and second costs for the second power consumption of the second data centre (22b) are minimized.

10. The system (30) of claim 1,
wherein a determination unit (30a) is adapted for measuring the first power consumption of the first data centre (22a) in relation to the first computational load on the first data centre (22a),
wherein the determination unit (30a) is adapted for determining the first power consumption of the first data centre (22a), based on an actual first computational load of the first data centre (22a) and a previously measured first power consumption of the first data centre (22a).

11. The system (30) of one of the claims 1 to 10,
wherein the distribution unit (30b) is adapted for dynamically distributing the overall computational load.

12. A power grid control system for controlling power transmission in a power grid (14) supplying electrical power to the first data centre (22a) and the second data centre (22b),
comprising the system of one of the claims 1 to 11.

13. A method for optimizing the overall power consumption of a plurality of data centres,
wherein the plurality of data centres comprises at least a first data centre (22a) and a second data centre (22b),
the method comprising the steps of:
Determining a first power consumption of the first data centre (22a) and determining a second power consumption of the second data centre (22b),
Distributing an overall computational load on the first and second data centres to a first computational load on the first data centre (22a) and to a second computational load on the second data centre (22b) based on the determined first and second power consumptions.

14. A program element for optimizing the overall power consumption of a plurality of data centres comprising at least a first data centre and a second data centre, the program element, when being executed by a processor, being adapted to carry out the following steps:
Determining a first power consumption of the first data centre (22a) and determining a second power consumption of the second data centre (22b),
Distributing an overall computational load on the first and second data centres to a first computational load on the first data centre (22a) and to a second computational load on the second data centre (22b) based on the determined first and second power consumptions.

15. A computer-readable medium, in which a program element for optimizing the power consumption of a plurality of data centres is stored, the plurality of data centres comprising at least a first data centre and a second data centre, the program element, when being executed by a processor, being adapted to carry out the following steps:
Determining a first power consumption of the first data centre (22a) and determining a second power consumption of the second data centre (22b),
Distributing an overall computational load on the first and second data centres to a first computational load on the first data centre (22a) and to a second computational load on the second data centre (22b) based on the determined first and second power consumptions.
